# EUROPEAN PATENT SPECIFICATION

(11) **EP 0 290 940 B1**
(45) Date of publication and mention of the grant of the patent: **27.07.1994**
(21) Application number: 88107137.7
(22) Date of filing: 04.05.1988
(51) Int. Cl.: F16D 13/48

(54) **Internal assisted clutch**
Kupplung mit innerer Kraftverstärkung
Embrayage à assistance interne

(30) Priority: 11.05.1987 US 48250; 01.02.1988 US 150794
(43) Date of publication of application: 17.11.1988
(73) Proprietor: DANA CORPORATION, Toledo, OH 43615 (US)
(72) Inventor: Flotow, Richard A., Butler Indiana 46721 (US); Dickson, Thomas G., Ft. Wayne Indiana 46815 (US)
(74) Representative: Kopacz, William James

(56) References cited:
- US-A- 2 067 970
- US-A- 2 562 613
- US-A- 2 765 892
- US-A- 3 667 582
- US-A- 3 752 286

## Description

### BACKGROUND OF THE INVENTION

### 1. Field of the Invention

The present invention relates to clutches in general and more particularly to a clutch having an internal assist to help move the clutch to a disengaged position.

### 2. Background of the Invention

There are many examples of prior art assist devices, but the great majority of them have an assist device which is located outside of the clutch cover. Additionally, truck clutches take a lot of effort to disengage and previously known assist devices are complex, expensive, subject to breakdown because of excessive parts, and are positioned externally of the clutch where they are subject to damage from the elements.

Typical prior art devices would be those shown in US 2,067,970 and US 2,765,892. These prior art devices are conventional clutch structures which do not show or suggest the addition of assister springs to the clutch. Assister springs, in accordance with the instant invention, reduce the amount of force required to be exerted to move the clutch to the disengaged position while not affecting the amount of frictional force generated by the engagement springs when the clutch is in the engaged position. As will be discussed in more detail herein after, the radially oriented assister springs according to the invention accomplish this simply and effectively.

### SUMMARY OF THE INVENTION

The present invention relates to an improvement in spring loaded clutches wherein an assisting force internally of the clutch cover assembly is generated when the clutch release mechanism is activated. More particularly, in a preferred embodiment, three springs are disposed circumferentially equidistant about the clutch release collar. The release collar is provided with radially outwardly extending ramped surfaces against which the radially inner end of the assister springs engage and react. The radially outer ends of the assister springs are received on similar radially inwardly extending ramped surfaces formed in the clutch cover. When the clutch is in the engaged position the compressed assister springs are each disposed with its axis positioned radially with respect to the axis of the release collar and therefore do not urge the release collar axially, but rather their forces are directed radially only. However when the release collar is moved axially relative to the clutch cover, such as would occur when the clutch is being disengaged, the assister springs are titled away from their radial position, such that a component of their force urges the collar in the direction of its movement, assisting the collar in overcoming the load of the clutch engaging springs.

The instant invention relates to a clutch assembly including a cover rotatable about an axis, a pressure plate means rotatable about the axis, means for connecting the cover to the pressure plate means for rotation therewith while permitting the pressure plate means to move axially relative to the cover between the engaged and disengaged positions, the pressure plate means including a pressure plate and a release collar connected to the pressure plate for axial movement therewith between engaged and disengaged positions. The device according to the instant invention is characterized by means for exerting a force radially relative to the axis of rotation against said release collar when the pressure plate means is disposed in said engaged position and for exerting a force angularly against said release collar when the pressure plate means is axially moved from the engaged position. Further inventive features are set forth in the claims.

### BRIEF DESCRIPTION OF THE DRAWINGS

For a fuller understanding of the nature and objects of the invention, reference should be made to the following detailed description taken in conjunction with the accompanying drawings, in which:
FIG. 1 is an elevational view looking from the throw-out bearing end of a clutch cover assembly embodying this invention, with the throw-out bearing and other portions being omitted for added clarity and with portions of the clutch cover being broken away to reveal the relationship of internal components of the clutch;
FIG. 2 is a sectional view taken substantially along the lines 2-2 in FIG. 1 showing the clutch cover assembly with the pressure plate and the other components in the clutch engaged position; and
FIG. 3 is a view taken similarly to FIG. 2 with the components in the clutch disengaged position.
FIG. 4 is an end elevational view of a clutch cover assembly in accordance with the present invention, a portion thereof being omitted for clarity to reveal the relationship of the internal components of the assembly.
FIG. 5 is a sectional elevational view taken along line 5-5 of FIG. 4 showing the components of the clutch cover assembly in an engaged position.
FIG. 6 is an end elevational view, taken in the opposite direction from FIG. 4, of the inside of the cover of the cover assembly illustrated in FIGS. 4 and 5.
FIG. 7 is a fragmentary sectional elevational view taken along line 7-7 of FIG. 6.
FIG. 8 is a fragmentary sectional elevational view taken along line 8-8 of FIG. 7.
FIG. 9 is an end elevational view, taken in the same direction as FIG. 4, of the release sleeve of the cover assembly.

### DETAILED DESCRIPTION OF A PREFERRED EMBODIMENT

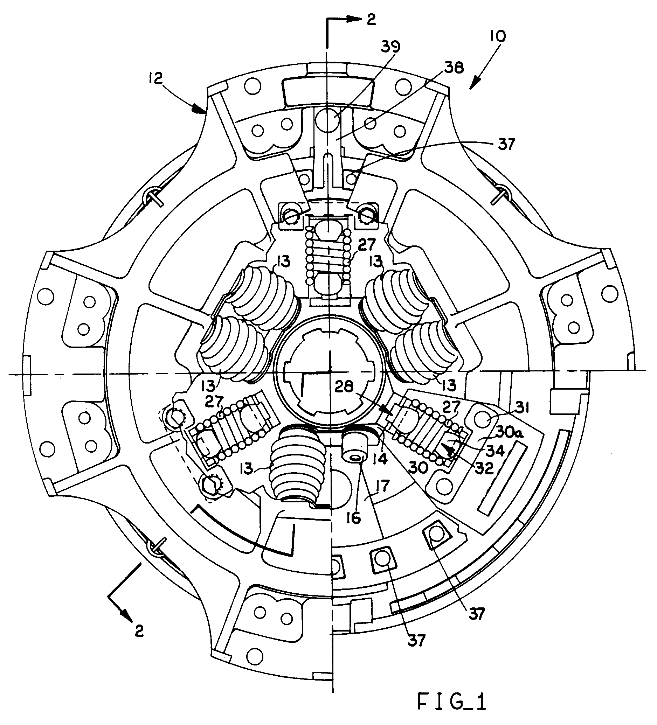

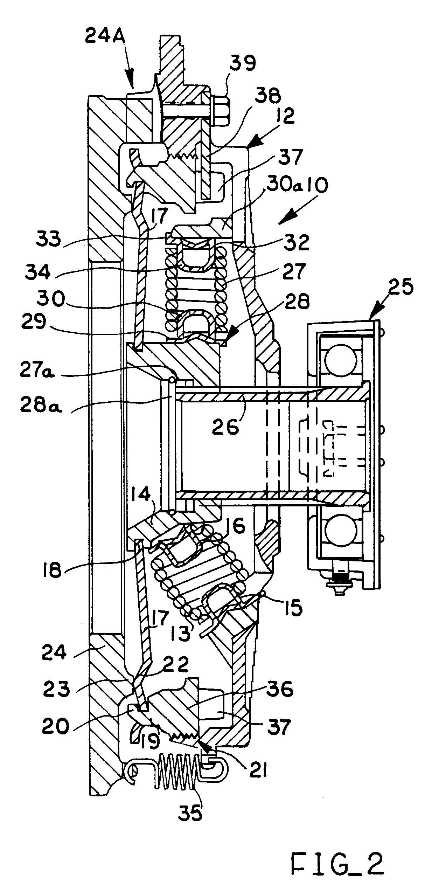

Referring to FIGS. 1 and 2, the clutch cover assembly 10, includes a clutch cover 12 which is conventionally adapted to be secured to a flywheel (not shown) for unitary rotation. The conventional driven discs of the clutch 10 are also not shown for added clarity. Six coiled compression springs 13 (one of which is being omitted in FIG. 1 for clarity) in three pairs of two springs each are compressed between the cover 12 and a titled ramp on a release collar 14. These springs 13 and their cooperation with the release collar 14 are covered in detail in the description regarding FIGS. 1-5 of the U.S. Patent 3,394,788, which patent is assigned to the assignee of the present invention, and detailed description of the structure and operation thereof is incorporated by reference. Suffice it to say that the radially outer end of each spring 13 is piloted on a button 15 which is slanted such that its axis extends radially inwardly and forwardly toward a substantially coaxial button 16 carried by the release collar 14 on the external periphery thereof. The buttons 15 and 16 pilot the opposed ends of the springs 13. The springs 13 urge the collar 14 to the left, or engaged position. A plurality of clutch levers 17 engage, at their inner end, in a peripheral groove 18 formed in the collar 14, while the outer end of each lever has an opening 19 which receives a leftwardly projecting pivot 20 formed on the left face of an adjusting ring; which ring is threaded into the clutch cover 12 as shown at 21. Intermediate the ends of each lever 17, but closer to its outer end, is a leftwardly extending projection 22 which pivotally and pressingly engages an annular shoulder 23 formed on the right side of a pressure plate 24. Thus leftward movement of the release collar 14 causes the levers 17 to force the pressure plate 24 to its engaged position as seen in FIG. 2. As explained in said Patent 3,394,788, movement to the left causes a greater component of force of springs 13 to be imposed upon the pressure plate 24, while movement to the right of the collar 14, caused by movement toward disengagement of a throw-out bearing 25 carried by a sleeve 26 which sleeve in turn is secured to the release collar by a pair of snap rings 27a and 28a, causes the axis of the springs 13 to become more radially disposed, which reduces the component of force of the springs 13 which the release bearing 25 must overcome.

The pressure plate 24 is connected to the cover 12 for unitary rotation and relative axial movement by a plurality of spaced lug and slot arrangements 24a formed conventionally on the pressure plate and cover, respectively.

Means are provided to assist the release collar 14 in being moved toward the disengaged position by throw-out bearing 25. More particularly, three assister springs 27 are equally displaced circumferentially about the collar 14 with one assist spring being disposed between each pair of adjacent engagement springs 13. As seen in FIGS. 1 and 2, the assister springs are coiled and compressed, with their axis disposed radially with respect to the clutch cover 12 and collar 14 when the clutch 10 is in the engaged position.

A button 28 carried by the periphery of the collar 14 adjacent the right end thereof has a ramped base 29 which has a hat shaped projection 30 extending radially outwardly and into the center of the adjacent coil spring 27 to pilot the inner end of the latter. A leftwardly extending bracket 30a is secured to the cover 12, as by bolts 31, and a portion of the bracket 30a overlies the spring 27. The bracket 30a has a button 32 carried on the internal surface of the bracket 30a, adjacent the left end thereof. The button 32 has a ramped base 33 from which projects radially inwardly a hat shaped projection 34 extending radially inwardly and into the center of the adjacent coil spring 27 to pilot the outer end of the latter. When positioned radially as shown in FIGS. 1 and 2, all the forces of the coiled compression springs 27 are directed radially and no component imposes an axial urging force on the collar 14.

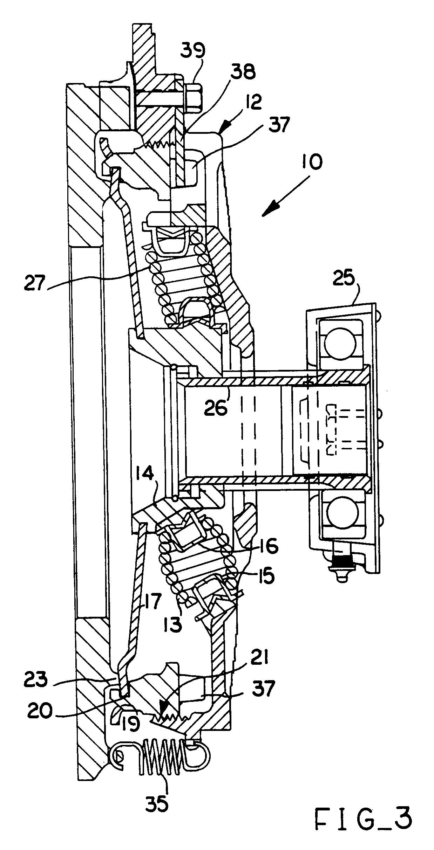

Movement of the throw-out bearing 25 toward its disengaged position shown in FIG. 3 results in the following action. The release collar 14 compresses the springs 13 and tilts them toward a radial position (as shown in FIG. 3) the inner ends of the clutch levers 17 move to the right thereby removing the engaging load from the pressure plate 24 and allowing return springs 35 to move the plate 24 to the right. Simultaneously with the commencement of the rightward movement of the collar 14, button 28 moves to the right thereby tilting the axis of the assister springs 27 so that the axis is inclined toward the right and a component of the forces of the assister springs is now able to impose an assisting force upon the rightward movement of the collar 14 and the throw-out bearing 25 thereby reducing the effort needed to be expended by the operator of the clutch 10 in moving it to its disengaged position of FIG. 3.

Release of the throw-out bearing 25 by the operator will allow the engaging springs 13 to re-engage the clutch, there being six springs 13 and only three assister springs 27. The design must be such that the assister springs always impose a smaller load on the clutch then the engagement springs 13.

It is also desirable that the clutch be adjustable either manually or automatically to adjust the position of the release collar upon wear of the clutch, for if the clutch is not adjustable it will have a very limited life. As the clutch wears, there is a tendency for the pressure plate 24 to move further to the left which would result in the condition that when the clutch is engaged, the collar 14 will be positioned to the left of the position shown in FIG. 2 and the axis of the assister springs 27 would no longer be radially straight but would be canted with their inner ends being displaced to the left. This condition would result in a component of force of the springs 27 urging the collar to the left when in the engaged position, which component would have to be overcome by the operator to cause clutch disengagement. Also, assister springs 27 would not render as much assistance to the operator when starting from such a canted position.

To this end, the manually adjustable adjusting ring 36 which is threaded in the cover 12 at 21 may be rotated so that the pilot 20 moves to the left. This will rotate all the clutch levers about their fulcrum at shoulder 23 so that their inner ends in groove 18 will move to the right and thereby move the release collar to the right. The ring 36 has a plurality of rightwardly projecting lugs 37, as seen in FIGS. 2 and 3, which lugs are circumferentially spaced, as seen in FIG. 1. A lock pin 38 is secured between a pair of adjacent lugs 37 by a bolt 39 threaded in the cover 12, to securely position the adjusting ring 36. The bolt 39 and lock pin 38 may be removed to allow adjustment of the adjusting ring.

Examples of various configurations of clutch angularly disposed engaging springs are shown in U.S. Patent 3,394,788 which is incorporated herein by reference as to those devices shown therein which can be used with a clutch cover and release collar; said Patent and the present invention being assigned to the assignee of the present invention. However, clutch engaging springs which are disposed axially are contemplated as being workable with the assister springs of the present invention.

When the pressure plate is in the engaged position as shown in FIGS. 1 and 2, the coils of the assister springs 27 are nearly closed, the average spacing between each coil being about eight thousandths (.008) of an inch. The small clearance between coils allows free axial movement of the coils when the pressure plate is disengaged. In the closed condition, the assister springs 27 form a near positive circumferential driving connection between the collar 14 and the cover 12. This driving connection allows the elimination of a supplemental driving connector between the cover and collar in most applications. For example, in U.S. Patent 3,394,788, the driving lugs (reference numerals 64 and 66 in U.S. Patent 3,394,788) possibly could be eliminated by use of the present invention.

Numerous changes can be made within the scope of the inventive concept taught herein such as adapting the invention in a push type clutch instead of the pull type shown.

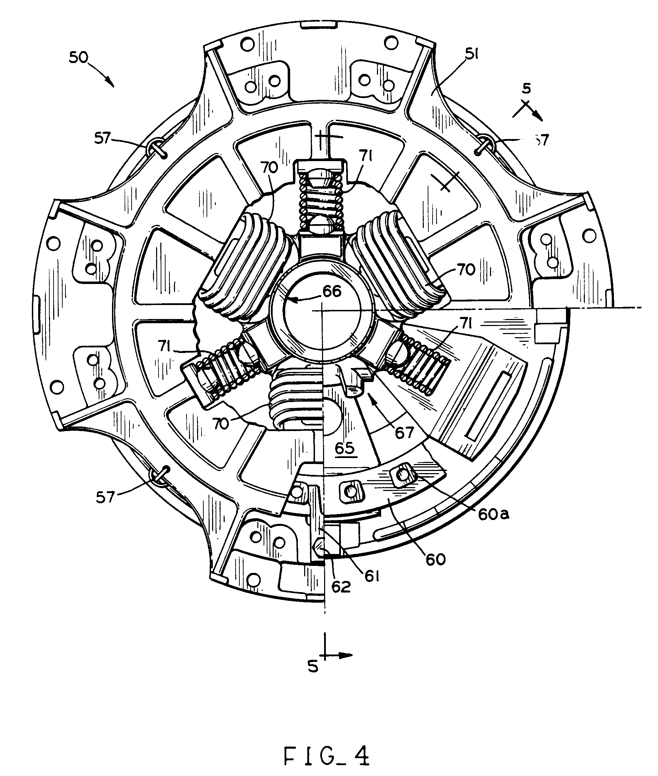

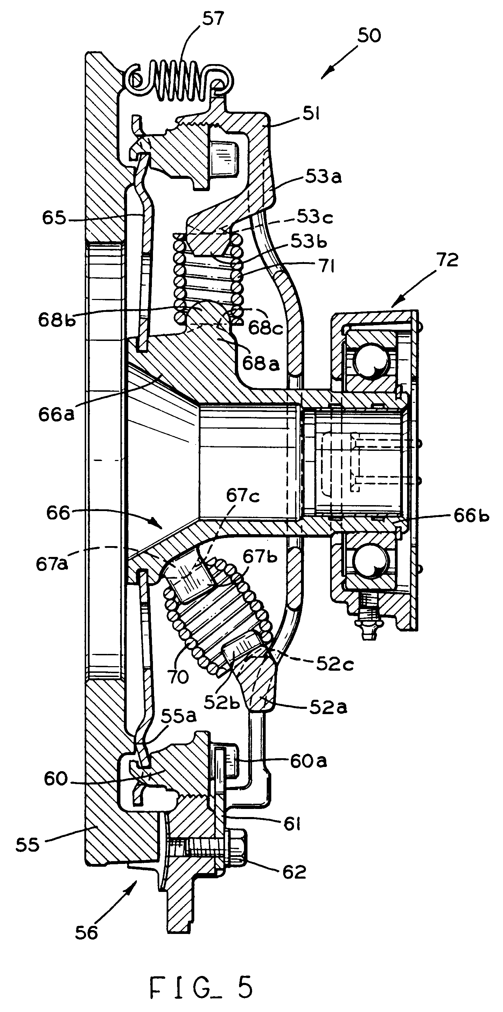

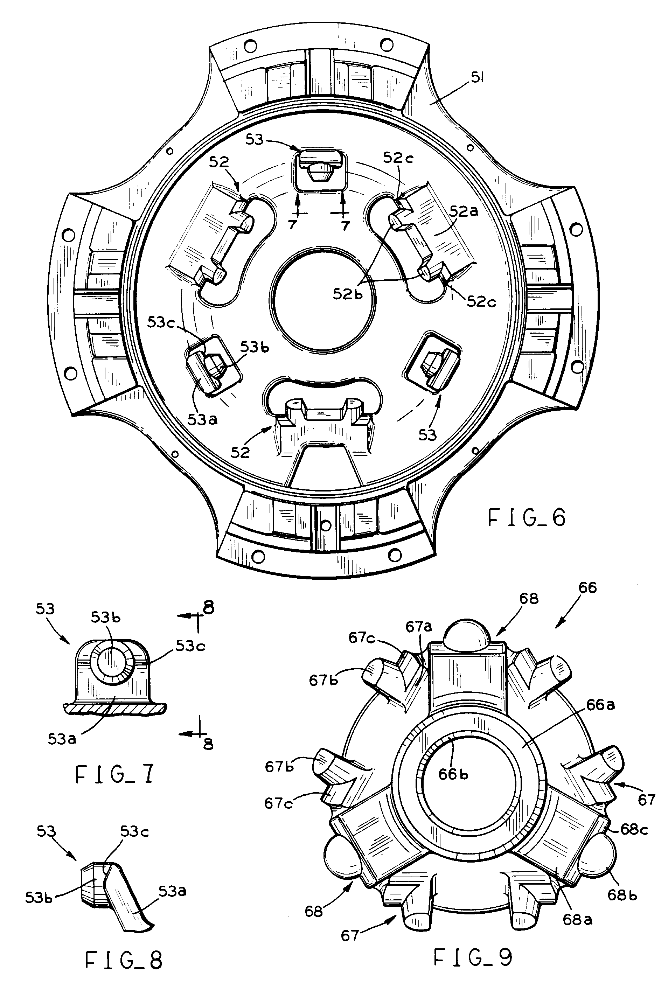

Referring now to FIGS. 4 and 5, there is illustrated a clutch cover assembly, indicated generally at 50, also in accordance with the present invention. The assembly 50 includes a cover 51 which is adapted to be connected to a flywheel (not shown) in a conventional manner for rotation therewith about a longitudinal axis. The entire cover 51 is formed from a single piece of material, such as iron by casting. The structure of the clutch cover 51 is illustrated in greater detail in FIGS. 6 through 8. As shown therein, the main body of the cover 51 is generally annular in shape and includes a plurality of engagement spring seats, indicated generally at 52. Each of the engagement spring seats 52 is formed by a seat portion 52a having a pair of upstanding ear portions 52b formed thereon. The seat portions 52a are formed integrally (i.e., from the same piece of material) with the cover 51.

The seat portions 52a are elongated in shape and are oriented perpendicularly relative to a bisecting radius of the cover 51 extending therethrough. The seat portions 52a extend radially inwardly and axially forwardly from the cover 51 at an angle relative to the axis of rotation of the assembly 50. Each of the seat portions 52a terminates in an inwardly facing surface 52c, which is best shown in FIGS. 5 and 6. As illustrated therein, the inwardly facing surfaces 52c are not flat, but rather have a generally V-shaped cross section so as to define a pivot line thereacross. The ear portions 52b are formed integrally with the seat portions 52a and extend further inwardly and forwardly from each of the inwardly facing surfaces 52c at an angle relative to the axis of rotation. The ear portions 52b are spaced apart from one another. The portion of the inwardly facing surface 52c extending between the ear portions 52b may be V-shaped as described above or may be flat as illustrated. Alternatively, a single ear portion (not shown) extending across the central portion of the inwardly facing surface 52c may be provided in lieu of the two separate ear portions 52b for each of the engagement spring seats 52.

The cover 51 further includes a plurality of assister spring seats, indicated generally at 53. Each of the assister spring seats 53 is formed by an arm portion 53a having a button portion 53b formed thereon. The arm portions 53a are formed integrally with the cover 51. The arm portions 53a extend inwardly and forwardly from the cover 51 at an angle with respect to the axis of rotation of the assembly 50. Each of the arm portions 53a terminates in an inwardly facing surface 53c, which is best shown in FIGS. 5 and 8. As illustrated therein, the inwardly facing surfaces 53c are not flat, but rather have a generally V-shaped cross section so as to define a pivot line thereacross. The button portions 53b are formed integrally with the seat portions 53a and extend radially inwardly from the inner surfaces 53c at a right angle relative to the axis of rotation.

An annular pressure plate 55 is connected to the cover 51 by means of a plurality of spaced lug and slot arrangements, indicated generally at 56 in FIG. 5. The lug and slot arrangements 56 are conventional in the art and are provided to permit the cover 51 to rotatably drive the pressure plate 55, while allowing the pressure plate 51 to move axially relative to the cover 51, as is well known in the art. The pressure plate 55 is urged toward the cover 51 by a plurality of return springs 57 disposed about the periphery of the assembly 50. An annular shoulder 55a is formed about the pressure plate 55 facing toward the cover 51.

The clutch cover assembly 50 may include an adjusting ring, as shown at 60 in FIGS. 4 and 5. The adjusting ring 60 is conventional in the art and includes an outer threaded surface which is adapted to cooperate with an inner threaded surface formed on the cover 51. Rotation of the adjusting ring 60 relative to the cover 51 causes axial movement of the adjusting ring 60. The illustrated adjusting ring 60 is of the manual type, including a plurality of upstanding lugs 60a formed thereon. A lock strap 61 is secured to the cover 51 by a bolt 62 to maintain the adjusting ring 60 in a desired rotational position relative to the cover 51. The structure and operation of the manual adjusting ring 60 is described more fully in U.S. Patent No. 4,285,424, the disclosure of which is incorporated herein by reference. If desired, an automatic adjusting ring (not shown) may be used instead of the manual adjusting ring 60. The structure and operation of the automatic adjusting ring is described more fully in U.S. Patent No. 3,752,286, the disclosure of which is also incorporated herein by reference. Lastly, the clutch cover assembly 50 may be of the non-adjustable type, wherein no adjusting ring is provided. The structure and operation of the non-adjustable clutch cover assembly is described more fully in U.S. Patent No. 4,332,314, the disclosure of which is also incorporated herein by reference.

A plurality of conventional levers 65 are provided within the clutch cover assembly 50. The levers 65 extend generally radially outwardly from the axis of rotation and are spaced equidistantly thereabout. The outermost ends of the levers 65 have slots formed therethrough to receive respective projections formed on the adjusting ring 60. The innermost ends of the levers 65 are engaged in a peripheral groove formed in a release sleeve, indicated generally at 66. The release sleeve 66 is disposed co-axially about the axis of rotation and is permitted to move a limited distance therealong. The structure of the release sleeve 66 is described in greater detail below. Between their outermost and innermost ends, the levers 65 engage the annular shoulder 55a of the pressure plate 55. As is well known in the art, axial movement of the release sleeve 66 causes the levers 65 to pivot about the projections of the adjusting ring 60, thereby causing axial movement of the pressure plate 55.

The structure of the release sleeve 66 is best shown in FIGS. 5 and 9. As illustrated therein, the release sleeve 66 is generally elongated and cylindrical in shape. The entire release sleeve 66 is formed from a single piece of material, such as iron by casting, and includes a first end portion 66a, which is located within the clutch cover assembly 50, and a second end portion 66b, which extends outside of the assembly 50. The first end portion 66a is generally annular in shape and includes a plurality of engagement spring seats, indicated generally at 67. Each of the engagement spring seats 67 is formed by a seat portion 67a having a pair of upstanding ear portions 67b formed thereon. The seat portions 67a are formed integrally with the release sleeve 66.

The seat portions 67a are elongated in shape and are oriented perpendicularly relative to a bisecting radius of the release sleeve 66 extending therethrough. The seat portions 67a extend radially outwardly and axially rearwardly from the first end portion 66a at an angle relative to the axis of rotation. Each of the seat portions 67a terminates in an outwardly facing surface 67c, which is best illustrated in FIG. 9. As shown therein, the outwardly facing surfaces 67c are not flat, but rather have a generally V-shaped cross section so as to define a pivot line thereacross. The ear portions 67b are formed integrally with the seat portions 67a and extend further outwardly and rearwardly from the outwardly facing surfaces 67c at an angle relative to the axis of rotation. The ear portions 67c are spaced apart from one another. The portion of the outwardly facing surface 67c extending between the ear portions 67b may be V-shaped as described above or may be flat as illustrated. Alternatively, a single ear portion (not shown) extending across the outwardly facing surface 67c may be provided in lieu of the two separate ear portions 67b for each of the engagement spring seats 67.

The release sleeve 66 further includes a plurality of assister spring seats, indicated generally at 68. Each of the assister spring seats 68 is formed by an arm portion 68a having a button portion 68b formed thereon. The arm portions 68a are formed integrally with the release sleeve 66. The arm portions 68a extend outwardly from the release sleeve 66 at a right angle relative to the axis of rotation. Each of the arm portions 68a terminates in an outwardly facing surface 68c, which is best shown in FIG. 5. As illustrated therein, the outwardly facing surfaces 68c are not flat, but rather have a generally V-shaped cross section so as to define a pivot line thereacross. The button portions 68b are formed integrally with the seat portions 68a and extend radially outwardly from the outwardly facing surfaces 68c at a right angle relative to the axis of rotation.

A single engagement spring 70 is supported between each of the engagement spring seats 52 formed on the cover 51 and its corresponding engagement spring seat 67 formed on the release sleeve 66. As best shown in FIG. 4, each of the engagement springs 70 has a plurality of coils throughout the length thereof. Each of the coils is generally oval in shape and has a predetermined size. However, the coils which form the ends of the springs 70 may be slightly smaller in shape than the coils which form the central portions thereof. The ends of the engagement springs 70 are adapted to enclose the ear portions 52b and 67b of the engagement spring seats 52 and 67, respectively, so as to engage the inwardly facing and outwardly facing surfaces 52c and 67c thereof. The pivot lines defined on the inwardly facing and outwardly facing surfaces 52c and 67c of the engagement spring seats 52 and 67 permit the engagement springs 70 to pivot slightly as the release sleeve 66 is moved axially, as described above.

A single assister spring 71 is supported between each of the assister spring seats 53 formed on the cover 51 and its corresponding assister spring seat 68 formed on the release sleeve 66. As best shown in FIG. 4, each of the assister springs 70 is generally circular in shape throughout the length thereof. The ends of the assister springs 71 are adapted to enclose the button portions 53b and 68b of the assister spring seats 53 and 68, respectively, so as to engage the inwardly facing and outwardly facing surfaces 53c and 68c thereof. The pivot lines defined on the inwardly facing and outwardly facing surfaces 53c and 68c of the assister spring seats 53 and 68 permit the assister springs 71 to pivot slightly as the release sleeve 66 is moved axially, as described above.

## Claims

1. A clutch assembly (10) including a cover (12) rotatable about an axis, pressure plate means (24, 14, 26) rotatable about said axis, means (24A) for connecting said cover (12) to said pressure plate means (24, 14, 26) for rotation therewith while permitting said pressure plate means (24, 14, 26) to move axially relative to said cover (12) between engaged and disengaged positions, said pressure plate means (24, 14, 26) including a pressure plate (24) and a release collar (14) connected to said pressure plate (24) for axial movement therewith between said engaged and disengaged positions, characterized by means (27) for exerting a force radially relative to said axis of rotation against said release collar (14) when said pressure plate means (24, 14, 26) is disposed in said engaged position and for exerting a force angularly relative to said axis of rotation against said release collar (14) when said pressure plate means (24, 14, 26) is axially moved from said engaged position.

2. The clutch assembly defined in Claim 1 wherein said pressure plate means (24) includes a pressure plate (24) disposed co-axially relative to said cover (12) and a release sleeve (14,26) connected to said pressure plate (24) and axially movable therewith between said engaged and disengaged positions.

3. The clutch assembly defined in Claim 2 wherein said means for exerting a force includes at least one spring (27) extending between said release sleeve (14,26) and said cover (12), said spring (27) defining an axis which is perpendicular to said axis of rotation when said pressure plate means (24) is in said engaged position.

4. The clutch assembly defined in Claim 2 wherein said means for exerting a force includes a plurality of coiled springs (27) extending between said release sleeve (14,26) and said cover (12), said coiled springs (27) defining respective axes which are perpendicular to said axis of rotation when said pressure plate means (24) is in said engaged position.

5. The clutch assembly defined in Claim 3 wherein said release sleeve (14,26) has at least one spring seat (28) formed thereon which extends perpendicularly relative said axis of rotation.

6. The clutch assembly defined in Claim 3 wherein said cover (12) has at least one spring seat (32) formed thereon which extends perpendicularly relative said axis of rotation.

7. The clutch assembly defined in Claim 3 further including means (36) for adjusting the axial position of said release sleeve (14,26) relative to said cover (12) such that said spring (27) always defines an axes which is perpendicular to said axis of rotation when said pressure plate means (24) is in said engaged position.

8. The clutch assembly defined in Claim 7 wherein said means for adjusting includes an adjusting ring (36) threaded into said cover (12) and a plurality of levers (17) extending between said release sleeve (14,26) and said adjusting ring (36), said levers (17) engaging said pressure plate (24) such that rotation of said adjusting ring (36) causes axial movement of said adjusting ring (36) in one axial direction and corresponding axial movement of said release sleeve (14,26) in the opposite axial direction.

9. The clutch assembly defined in Claim 1 further including means (13) for urging said pressure plate means (24) toward said engaged position.

10. The clutch assembly defined in Claim 9 wherein said means for urging (13) includes means for exerting a force angularly against said pressure plate means (24) toward said engaged position.

11. A clutch assembly according to any preceding claim wherein said cover comprises:
a main body portion (51) which is generally annular in shape; and
at least one radially extending spring seat (53) formed on said main body portion (51).

12. The clutch assembly defined in Claim 11 wherein said spring seat (53) is an assister spring seat which includes an arm portion (53a) formed integrally with said main body portion (51) and extending radially inwardly therefrom.

13. The clutch assembly defined in Claim 12 wherein said arm portion (53a) terminates in an inwardly facing surface (53c), at least a portion of which has a generally V-shaped cross section.

14. The clutch assembly defined in Claim 13 wherein said assister spring seat (53) further includes at least one button portion (53b) formed integrally with said arm portion (53a).

15. A clutch assembly according to any preceding claim including a release sleeve (66) comprising:
an end portion (66a) which is generally annular in shape; and
at least one radially extending spring seat (68) formed on said end portion (66a).

16. The clutch assembly defined in Claim 15 wherein said spring seat (68) is an assister spring seat which includes an arm portion (68a) formed integrally with said end portion (66a) and extending radially outwardly therefrom.

17. The clutch assembly defined in Claim 16 wherein said arm portion (68a) terminates in an outwardly facing surface (68c), at least a portion of which has a generally V-shaped cross section.

18. The clutch assembly defined in Claim 17 wherein said assister spring seat (68) further includes at least one button portion (68b) formed integrally with said arm portion (68a).

19. A clutch assembly according to any preceding claim including a clutch cover assembly (50) comprising:
a cover (51);
a release sleeve (66); and
at least one engagement spring (70) engaged with said cover (51) and said release sleeve (66), said engagement spring (70) having a plurality of coils, each coil having a generally oval shape.

20. The clutch assembly defined in Claim 19 wherein said cover (51) includes a generally annular main body portion and at least one engagement spring seat (52) formed integrally on said main body portion, said engagement spring (70) engaging said engagement spring seat (52).

21. The clutch assembly defined in Claim 19 wherein said release sleeve (66) includes a generally annular end portion (66a) and at least one engagement spring seat (67) formed integrally on said end portion, said engagement spring (70) engaging said engagement spring seat (67).

22. The clutch assembly defined in Claim 19 wherein said coils which form the ends of said engagement spring (70) are smaller in shape than said coils which form the central portion thereof.

## Patentansprüche

1. Kupplungsanordnung mit einem Deckel (12), der um eine Achse drehbar ist, einer Druckplatten-Einrichtung (24, 14, 26), die um die Achse drehbar ist, Einrichtungen (24A) zum Verbinden des Deckels (12) mit der Druckplatten-Einrichtung (24, 14, 26) zur Drehung mit dieser, während eine axiale Bewegung der Druckplatten-Einrichtung (24, 14, 26) relativ zum Deckel (12) zwischen eingerückten und ausgerückten Positionen ermöglicht ist, wobei die Druckplatten-Einrichtung (24, 14, 26) eine Druckplatte (24) und eine Ausrückmuffe (14) umfaßt, die mit der Druckplatte (24) zur axialen Bewegung mit dieser zwischen den eingerückten und ausgerückten Positionen verbunden ist, **gekennzeichnet durch** Einrichtungen (27) zum Ausüben einer radialen Kraft relativ zur Drehachse gegen die Ausrückmuffe (14), wenn die Druckplatten-Einrichtung (24, 14, 26) in der eingerückten Position ist und zum Ausüben einer Winkelkraft relativ zur Drehachse gegen die Ausrückmuffe (14), wenn die Druckplatten-Einrichtung (24, 14, 26) axial aus der eingerückten Position bewegt wird.

2. Kupplungsanordnung nach Anspruch 1, **dadurch gekennzeichnet,** daß die Druckplatten-Einrichtung (24) eine Druckplatte (24) aufweist, die koaxial relativ zum Deckel (12) angeordnet ist sowie eine Ausrückmuffe (14, 26), die mit der Druckplatte (24) verbunden und mit dieser axial zwischen der eingerückten und der ausgerückten Position beweglich ist.

3. Kupplungsanordnung nach Anspruch 2, **dadurch gekennzeichnet,** daß die Einrichtung zum Ausüben einer Kraft wenigstens eine Feder (27) aufweist, die sich zwischen der Ausrückmuffe (14, 26) und dem Deckel (12) erstreckt, und daß die Feder (27) eine Achse definiert, die senkrecht zur Drehachse liegt, wenn die Druckplatten-Einrichtung (24) sich in eingerückter Position befindet.

4. Kupplungsanordnung nach Anspruch 2, **dadurch gekennzeichnet,** daß die Einrichtung zum Ausüben einer Kraft eine Mehrzahl von Schraubenfedern (27) umfaßt, die sich zwischen der Ausrückmuffe (14, 26) und dem Deckel (12) erstrecken, daß ferner die Schraubenfedern (27) entsprechende Achsen definieren, die quer zur Drehachse liegen, wenn die Druckplatten-Einrichtung (24) sich in der eingerückten Position befindet.

5. Kupplungsanordnung nach Anspruch 3, **dadurch gekennzeichnet,** daß die Ausrückmuffe (14, 26) wenigstens einen an ihr angeformten Federsitz (28) hat, der sich quer relativ zur Drehachse erstreckt.

6. Kupplungsanordnung nach Anspruch 3, **dadurch gekennzeichnet,** daß der Deckel (12) wenigstens einen angeformten Federsitz (32) hat, der sich quer relativ zur Drehachse erstreckt.

7. Kupplungsanordnung nach Anspruch 3, **gekennzeichnet durch** Einrichtungen (36) zum Einstellen der axialen Position der Ausrückmuffe (14, 26) relativ zum Deckel (12), so daß die Feder (27) ständig eine Achse definiert, die senkrecht zur Drehachse liegt, wenn die Druckplatten-Einrichtung (24) sich in der eingerückten Position befindet.

8. Kupplungsanordnung nach Anspruch 7, **dadurch gekennzeichnet,** daß die Mittel zum Einstellen einen Einstellring (36) umfassen, der in den Deckel (12) eingeschraubt ist sowie eine Mehrzahl von Hebeln (17), die sich zwischen der Ausrückmuffe (14, 26) und dem Einstellring (36) erstrecken, und daß die Hebel (17) in Eingriff mit der Druckplatte (24) treten, so daß eine Rotation des Einstellringes (36) eine axiale Bewegung des Einstellringes (36) in einer axialen Richtung bewirkt sowie eine entsprechende axiale Bewegung der Ausrückmuffe (14, 26) in der entgegengesetzten axialen Richtung.

9. Kupplungsanordnung nach Anspruch 1, **gekennzeichnet durch** Mittel (13) zum Beaufschlagen der Druckplatten-Einrichtung (24) in Richtung auf die eingerückte Position.

10. Kupplungsanordnung nach Anspruch 9, **dadurch gekennzeichnet,** daß diese Einrichtungen (13) Mittel umfassen zum Ausüben einer Kraft im Winkel gegen die Druckplatten-Einrichtung (24) auf die eingerückte Position zu.

11. Kupplungsanordnung nach einem der vorhergehenden Ansprüche, **dadurch gekennzeichnet,** daß der Deckel einen Hauptkörper (51) aufweist mit allgemein ringförmiger Form sowie wenigstens einen radial verlaufenden Federsitz (53), der am Hauptkörper (51) angeformt ist.

12. Kupplungsanordnung nach Anspruch 11, **dadurch gekennzeichnet,** daß der Federsitz (53) ein Hilfsfedersitz ist, der einen Armabschnitt (53a) aufweist, der integral mit dem Hauptkörper (51) ausgebildet ist und sich radial einwärts durch diesen erstreckt.

13. Kupplungsanordnung nach Anspruch 12, **dadurch gekennzeichnet,** daß der Armabschnitt (53a) in einer einwärts gerichteten Fläche (53c) endigt, und daß wenigstens ein Teil der letzteren einen allgemein V-förmigen Querschnitt hat.

14. Kupplungsanordnung nach Anspruch 13, **dadurch gekennzeichnet,** daß der Hilfsfedersitz (53) ferner wenigstens einen Knopfabschnitt (53b) aufweist, der integral mit dem Armabschnitt (53a) ausgebildet ist.

15. Kupplungsanordnung nach einem der vorhergehenden Ansprüche, **gekennzeichnet durch** eine Ausrückmuffe (66) mit einem Endabschnitt (66a), der allgemein ringförmige Gestalt hat sowie wenigstens einem radial verlaufenden Federsitz (68), der an dem Endabschnitt (66a) angeformt ist.

16. Kupplungsanordnung nach Anspruch 15, **dadurch gekennzeichnet,** daß der Federsitz (68) ein Hilfsfedersitz ist, der einen Armabschnitt (68a) aufweist, der integral mit dem Endabschnitt (66a) ausgebildet ist und sich radial auswärts von diesem erstreckt.

17. Kupplungsanordnung nach Anspruch 16, **dadurch gekennzeichnet,** daß der Armabschnitt (68a) in einer auswärts gerichteten Fläche (68c) endigt, und daß wenigstens ein Teil der letzteren einen allgemein V-förmigen Querschnitt hat.

18. Kupplungsanordnung nach Anspruch 17, **dadurch gekennzeichnet,** daß der Hilfsfedersitz (68) ferner wenigstens einen Knopfabschnitt (68b) aufweist, der integral mit dem Armabschnitt (68a) ausgebildet ist.

19. Kupplungsanordnung nach einem der vorhergehenden Ansprüche, **gekennzeichnet durch** eine Kupplung (50) mit einem Deckel (51), einer Ausrückmuffe (66) und wenigstens einer Einrückfeder (70), die mit dem Deckel (51) und der Ausrückmuffe (66) in Eingriff steht, und daß die Einrückfeder (70) eine Mehrzahl von Windungen hat, von denen jede eine allgemein ovale Form hat.

20. Kupplungsanordnung nach Anspruch 19, **dadurch gekennzeichnet,** daß der Deckel (51) einen allgemein ringformigen Hauptkörper und wenigstens einen Einrückfedersitz (52) aufweist, der integral mit dem Hauptkörper ausgebildet ist, und daß die Einrückfeder (70) in Eingriff mit dem Federsitz (52) steht.

21. Kupplungsanordnung nach Anspruch 19, **dadurch gekennzeichnet,** daß die Ausrückmuffe (66) einen allgemein ringförmigen Endabschnitt (66a) und wenigstens einen Einrückfedersitz (67) aufweist, der integral am Endabschnitt angeformt ist, und daß die Einrückfeder (70) in Eingriff mit dem Federsitz (67) steht.

22. Kupplungsanordnung nach Anspruch 19, **dadurch gekennzeichnet,** daß die Windungen, welche die Enden der Einrückfeder (70) bilden, kleiner ausgebildet sind als die Windungen, welche den mittleren Teil der Feder bilden.

## Revendications

1. Ensemble d'embrayage (10) comprenant une cloche (12) tournant selon un axe, des moyens de plateau de pression (24, 14, 26) tournant selon ledit axe, un moyen (24A) pour raccorder ladite cloche (12) auxdits moyens de plateau de pression (24, 14, 26) pour une rotation conjointe tout en permettant auxdits moyens de plateau de pression (24, 14, 26) de se déplacer axialement par rapport à ladite cloche (12) entre des positions engagée et désengagée, lesdits moyens de plateau de pression (24, 14, 26) comprenant un plateau de pression (24) et une bague de débrayage (14) raccordée audit plateau de pression (24) pour un déplacement axial entre lesdites positions engagée et désengagée, ensemble caractérisé par un moyen (27) pour exercer un effort radial par rapport audit axe de rotation à l'encontre de ladite bague de débrayage (14) lorsque lesdits moyens de plateau de pression (24, 14, 26) sont placés dans ladite position engagée et pour exercer un effort angulaire par rapport audit axe de rotation à l'encontre de ladite bague de débrayage (14) lorsque lesdits moyens de plateau de pression (24, 14, 26) se déplacent axialement de ladite position engagée.

2. Ensemble d'embrayage selon la revendication 1, dans lequel ledit moyen de plateau de pression (24) comprend un plateau de pression (24) placé coaxialement à ladite cloche (12) et un manchon de débrayage (14, 26) raccordé audit plateau de pression (24) et mobile axialement entre lesdites positions engagée et désengagée.

3. Ensemble d'embrayage selon la revendication 2, dans lequel ledit moyen exerçant un effort comprend au moins un ressort (27) s'étendant entre ledit manchon de débrayage (14, 26) et ladite cloche (12), ledit ressort (27) définissant un axe normal audit axe de rotation lorsque ledit moyen de plateau de pression (24) est dans ladite position engagée.

4. Ensemble d'embrayage selon la revendication 2, dans lequel ledit moyen exerçant un effort comprend une pluralité de ressorts hélicoïdaux (27) s'étendant entre ledit manchon de débrayage (14, 26) et ladite cloche (12), lesdits ressorts hélicoïdaux (27) définissant des axes respectifs normaux audit axe de rotation lorsque ledit moyen de plateau de pression (24) est dans ladite position engagée.

5. Ensemble d'embrayage selon la revendication 3, dans lequel ledit manchon de débrayage (14, 26) possède au moins un siège de ressort (28) formé dessus et s'étendant perpendiculairement audit axe de rotation.

6. Ensemble d'embrayage selon la revendication 3, dans lequel ladite cloche (12) possède au moins un siège de ressort (32) s'étendant normalement audit axe de rotation.

7. Ensemble d'embrayage selon la revendication 3, comprenant, de plus, un moyen (36) pour régler la position axiale dudit manchon de débrayage (14, 26) par rapport à ladite cloche (12) de telle façon que ledit ressort (27) définisse toujours un axe qui est perpendiculaire audit axe de rotation lorsque ledit moyen de plateau de pression (24) est dans ladite position engagée.

8. Ensemble d'embrayage selon la revendication 7, dans lequel ledit moyen de réglage comprend un anneau de réglage (36) vissé dans ladite cloche (12) et une pluralité de leviers (17) s'étendant entre ledit manchon de débrayage (14, 26) et ledit anneau de réglage (36), lesdits leviers (17) coopérant avec ledit plateau de pression (24) de telle façon qu'une rotation dudit anneau de réglage (36) provoque un déplacement axial dudit anneau de réglage (36) dans une direction axiale et un déplacement axial correspondant dudit manchon de débrayage (14, 26) dans la direction axiale opposée.

9. Ensemble d'embrayage selon la revendication 1, comprenant, de plus, un moyen (13) pour pousser ledit moyen de plateau de pression (24) vers ladite position engagée.

10. Ensemble d'embrayage selon la revendication 9, dans lequel ledit moyen de poussée (13) comprend un moyen pour exercer un effort angulaire à l'encontre dudit moyen de plateau de pression (24) vers ladite position engagée.

11. Ensemble d'embrayage selon l'une quelconque des revendications précédentes, dans lequel ladite cloche comprend une partie principale de corps (51) qui est de forme globale annulaire et au moins un siège de ressort s'étendant radialement (53) formé sur ladite partie principale de corps (51).

12. Ensemble d'embrayage selon la revendication 11, dans lequel ledit siège de ressort (53) est un siège de ressort d'assistance comprenant une partie de bras (53a) formée de façon intégrale à ladite partie principale de corps (51) et s'y étendant radialement vers l'intérieur.

13. Ensemble d'embrayage selon la revendication 12, dans lequel ladite partie de bras (53a) se termine en une surface tournée vers l'intérieur (53c), dont au moins une partie possède une section droite de forme globale en V.

14. Ensemble d'embrayage selon la revendication 13, dans lequel ledit siège de ressort d'assistance (53) comprend, de plus, au moins une partie de bouton (53b) formée de façon intégrale à ladite partie de bras (53a).

15. Ensemble d'embrayage selon l'une quelconque des revendications précédentes, comprenant un manchon de débrayage (66) muni d'une partie d'extrémité (66a) de forme globale annulaire et d'au moins un siège de ressort s'étendant radialement (68) formé sur ladite partie d'extrémité (66a).

16. Ensemble d'embrayage selon la revendication 15, dans lequel ledit siège de ressort (68) est un siège de ressort d'assistance comprenant une partie de bras (68a) formée de façon intégrale à ladite partie d'extrémité (66a) et s'étendant radialement vers l'extérieur.

17. Ensemble d'embrayage selon la revendication 16, dans lequel ladite partie de bras (68a) se termine en une surface tournée vers l'extérieur (68c) dont au moins une partie possède une section droite de forme globale en V.

18. Ensemble d'embrayage selon la revendication 17, dans lequel ledit siège de ressort d'assistance (68) comprend, de plus, au moins une partie de bouton (68b) formée de façon intégrale à ladite partie de bras (68a).

19. Ensemble d'embrayage selon l'une quelconque des revendications précédentes, comprenant un ensemble de cloche d'embrayage (50) comprenant une cloche (51), un manchon de débrayage (66) et au moins un ressort d'engagement (70) coopérant avec ladite cloche (51) et ledit manchon de débrayage (66), ledit ressort d'engagement (70) possédant une pluralité de spires possédant chacune une forme globalement ovale.

20. Ensemble d'embrayage selon la revendication 19, dans lequel ladite cloche (51) comprend une partie principale de corps globalement annulaire et au moins un siège de ressort d'engagement (52) formé de façon intégrale sur ladite partie de corps principale, ledit ressort d'engagement (70) coopérant avec ledit siège de ressort d'engagement (52).

21. Ensemble d'embrayage selon la revendication 19, dans lequel ledit manchon de débrayage (66) comprend une partie d'extrémité globalement annulaire (66a) et au moins un siège de ressort d'engagement (67) formé de façon intégrale sur ladite partie d'extrémité, ledit ressort d'engagement (70) coopérant avec ledit siège de ressort d'engagement (67).

22. Ensemble d'embrayage selon la revendication 19, dans lequel lesdites spires formant les extrémités dudit ressort d'engagement (70) sont de taille plus petite que lesdites spires formant sa partie centrale.
